# EUROPÄISCHE PATENTSCHRIFT

(11) **EP 0 931 952 B1**
(45) Veröffentlichungstag und Bekanntmachung des Hinweises auf die Patenterteilung: **04.07.2001**
(21) Anmeldenummer: 98123249.9
(22) Anmeldetag: 07.12.1998
(51) Int. Cl.: F16D 25/08

(54) **Reibungskupplung mit selbstpumpendem Ausrücker**
Friction clutch with self-pumping release device
Embrayage à friction avec dispositif de débrayage à auto-pompage

(30) Priorität: 23.01.1998 DE 19802537
(43) Veröffentlichungstag der Anmeldung: 28.07.1999
(73) Patentinhaber: Mannesmann Sachs Aktiengesellschaft, 97424 Schweinfurt (DE)
(72) Erfinder: Fliege, Hans, Dipl.-Ing., 97531 Theres (DE)
(74) Vertreter: Rehmann, Klaus-Thorsten, Dipl.-Ing.

(56) Entgegenhaltungen:
- EP-A- 0 479 081
- DE-A- 4 447 455
- DE-B- 2 023 252
- DE-C- 3 842 722
- US-A- 5 575 368

## Beschreibung

Die Erfindung betrifft eine Reibungskupplung ohne Kühlölkreislauf, insbesondere für Kraftfahrzeuge, mit einem drehfest mit dem Schwungrad einer Brennkraftmaschine verbindbaren Kupplungsgehäuse, einer mit dem Kupplungsgehäuse drehfest verbundenen, axial verlagerbaren, von einer Feder belasteten Anpreßplatte, zur Anpressung einer mit Reibbelägen versehenen Kupplungsscheibe gegen das Schwungrad, und einer hydraulischen Ausrückeinrichtung, die mit der Feder in Verbindung bringbar ist.

Eine solche Reibungskupplung ist beispielsweise aus der DE 41 09 125 A1 bekannt. Die DE 196 22 773 offenbart eine hydraulische Ausrückeinrichtung für eine solche Reibungskupplung, die einen zum Kupplungsgehäuse konzentrisch anzuordnenden Nehmerzylinder umfaßt. Bei Einleitung des Auskuppelvorganges wird von einem Speicher Hydraulikflüssigkeit in den Arbeitsraum des Nehmerzylinders gepreßt, wodurch dieser ausfährt und das an ihm vorgesehene Ausrücklager gegen die die Anpreßplatte belastende Feder schiebt, so daß diese von der Anpreßplatte abhebt und der Reibschluß der Kupplungsscheibe aufgehoben wird.

Eine solche Reibungskupplung kann auch automatisch betätigt werden. Unter dem Stichwort "clutch by wire" sind unterschiedliche Betätigungsverfahren bekannt. Es kann eine elektrische Pumpe innerhalb des Fahrzeug-Motorraumes untergebracht sein, die zur Kupplungsbetätigung eingeschaltet wird und dann aus einem Speicher Hydraulikflüssigkeit in den Nehmerzylinder des Ausrückers pumpt.

Der Erfindung liegt die Aufgabe zugrunde, die eingangs beschriebene Reibungskupplung zu verbessern.

Zur Lösung der Aufgabe zeichnet sich eine gattungsgemäße Reibungskupplung durch eine vom umlaufenden Kupplungsgehäuse angetriebene Pumpeinrichtung zur Betätigung der Ausrückeinrichtung aus.

Durch diese Ausbildung braucht keine zusätzliche Energie zum Pumpenantrieb bereitgestellt zu werden. Außerdem kann eine kompakt aufgebaute und mit hohem Wirkungsgrad arbeitende Flügelzellenpumpe oder eine Zahnpumpe verwendet werden. Die Steuerung zum Druckaufbau kann mit wenigen Bauteilen und geringem Steuerungsaufwand realisiert werden. Die Pumpeinrichtung kann wie bisher auch als servounterstützte Betätigung oder zum automatischen Auskuppeln (clutch by wire) eingesetzt werden.

Wenn ein an sich konventioneller konzentrischer Nehmerzylinder verwendet wird, braucht dieser nur um wenige Funktionselemente ergänzt zu werden, um die erfindungsgemäße Funktion bereitzustellen.

Wenn die Pumpeinrichtung mit einem Druckspeicher in Verbindung steht, der hydraulisch mit der Ausrückeinrichtung verbunden ist, kann die Kupplung auch bei stillstehendem Kupplungsgehäuse getrennt werden. Dies ist notwendig, um das Fahrzeug in Betrieb nehmen zu können, wenn es mit eingelegtem Gang abstellbar sein soll. Natürlich kann die erforderliche Parksperre auch direkt in das Getriebe eingreifen, wie es bei allen Fahrzeugen mit Automatikgetriebe erfolgt.

Mit Hilfe einer Zeichnung soll ein Ausführungsbeispiel der Erfindung nachfolgend näher erläutert werden. Es zeigt:

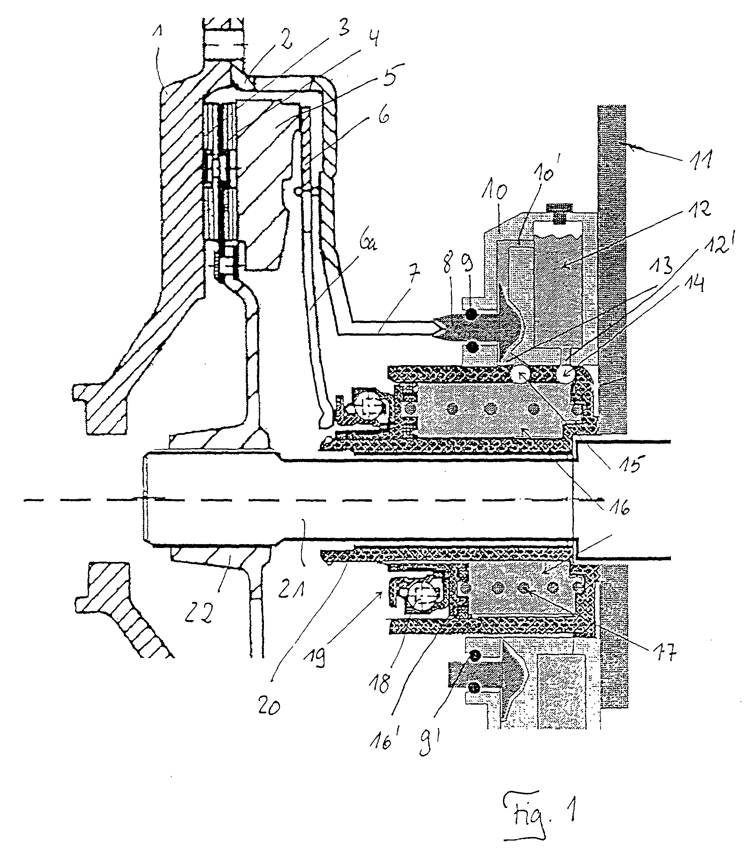

- Figur 1 -: einen schematischen Teilschnitt durch eine Reibungskupplung;
- Figur 2 -: einen Querschnitt durch einen konzentrischen Nehmerzylinder in schematischer Darstellung.

Die Reibungskupplung besteht im wesentlichen aus dem mit dem Schwungrad 1 einer Brennkraftmaschine verschraubbaren Kupplungsgehäuse 2, in dem zueinander konzentrisch eine von einer Membranfeder 6 belastete Anpreßplatte 5 und eine mit Reibbelägen 3, 4 versehene Kupplungsscheibe 22 angeordnet sind. Die Membranfeder 6 preßt die Anpreßplatte 5 und die Kupplungsscheibe 22 gegen das Schwungrad 1.

Die Ausrückeinrichtung 19 besteht aus dem auf der Getriebeeingangswelle 21 angeordneten zum Kupplungsgehäuse 2 konzentrischen Nehmerzylinder 20, mit einem Arbeitsraum 16 und dem Ausrücklager 18. Durch Befüllen des Arbeitsraumes 16 mit Hydraulikflüssigkeit fährt der Nehmerzylinder 20 aus und schiebt das Ausrücklager 18 auf die Zungen 6a der Membranfeder 6, so daß diese von der Anpreßplatte 5 abhebt und der Reibschluß der Kupplungsscheibe 22 aufgehoben wird. Die Rückstellung des Nehmerzylinders 20 erfolgt durch die in seinem Arbeitsraum 16 angeordnete Rückstellfeder 17.

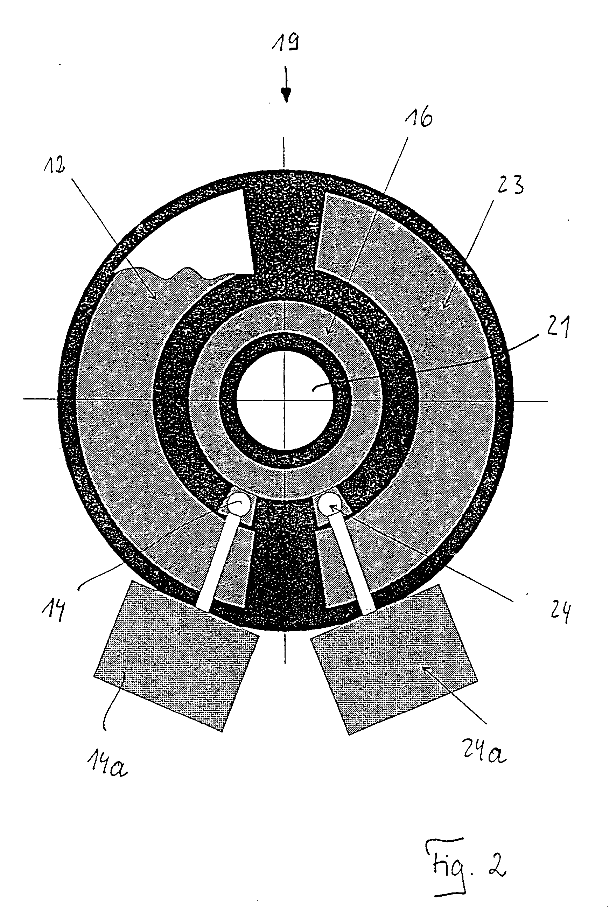

Konzentrisch zum Nehmerzylinder 20 ist eine Pumpeinrichtung 10, die als Flügelzellenpumpe oder Zahnpumpe ausgebildet ist, angeordnet. Das im Pumpraum 13 sich drehende Pumpenteil 8 ist mit einem axial vom Kupplungsgehäuse 2 abgewinkelten Flansch 7 verbunden. Die Abdichtung des sich drehenden Pumpenteiles 8 zum Gehäuse der Pumpe 10 erfolgt über Dichtungen 9, 9'. Der Pumpraum 13 mündet über eine Zulaufbohrung 15 in den Arbeitsraum 16 des Nehmerzylinders 20. Ein Vorratsraum 12 ist über die Ablaufbohrung 12', in die ein Steuerventil 14 integriert ist, ebenfalls mit dem Arbeitsraum 16 des Nehmerzylinders 20 verbunden. Über einen Ringkanal 10' ist der Vorratsraum 12 mit dem Pumpraum 13 verbunden. Wie Figur 2 zeigt, kann zusätzlich in der Pumpe ein Speicherraum 23 vorgesehen sein, der über ein von einer Spule 24a erregbares Magnetventil 24 ebenfalls mit dem Arbeitsraum 16 verbunden ist. In die Zulaufbohrung 15 ist ein Rücklaufverhinderer integriert. Das sich drehende Pumpenteil 8 fördert Hydraulikflüssigkeit aus dem Vorratsraum 12 in den Arbeitsraum 16. Ist das Steuerventil 14, das von einer Spule 14a betätigt werden kann, geöffnet, wird die Hydraulikflüssigkeit aus dem Arbeitsraum 16 in den Vorratsraum 12 gepumpt. Beim Umpumpen der Hydraulikflüssigkeit wird der Wirkungsgrad des Systems von den Pumpverlusten charakterisiert. Ist das Steuerventil 14 geschlossen, baut die Pumpe 8, 10 Druck im Arbeitsraum 16 auf, der dann auf den Kolben 16' wirkt, und das Ausrücklager 18 gegen die Membranfederzungen 6a schiebt. Die Rücklaufsperre (Rücklaufverhinderer) in der Zulaufbohrung 15 verhindert, daß der im Arbeitsraum 16 aufgebaute Druck entweicht.

Zur Steuerung des Maximaldruckes kann das Steuerventil 14 getaktet betrieben werden, wodurch der Druck begrenzt wird. Ebenso kann ein Druckbegrenzungselement dem Steuerventil 14 hinzugefügt werden. Mit einer Ansteuerung des Steuerventils 14 über eine Pulsbreiten-Modulation kann jeder gewünschte Druck aufgebaut und somit jede Kupplungsposition gehalten werden. Der aufgebaute Druck hängt von der Drehzahl der Brennkraftmaschine ab. Man kann diesen Effekt nutzen, wodurch das System die Eigenschaft einer Fliehkraftkupplung erhält. Dieses hat den Vorteil, daß man den Aufwand einer Pulsmodulation des Steuerventils 14 vermeiden kann. Die mechanischen Elemente prägen dann die Übertragungskennlinie. Das Steuerventil 14 wird für diesen Fall als Schaltventil mit Druckbegrenzung ausgebildet.

Zur Kompensation dieses Effekts ist es denkbar, die dem System eigene Übertragungsfunktion aufzunehmen und mit der Pulsbreiten-Modulation softwaretechnisch zu verknüpfen. Hierdurch sind Drucksensoren entbehrlich.

Steht die Brennkraftmaschine still, kann die Kupplung nicht betätigt werden. Um das Fahrzeug nach dem Stillstand wieder in Betrieb nehmen zu können, kann wie bei Automatikgetrieben üblich eine Parksperre vorgesehen sein, die beim Abstellen des Fahrzeugs in das Getriebe eingreift, so daß das Fahrzeug ohne eingelegten Gang abgestellt werden kann. Wenn das Fahrzeug mit eingelegtem Gang geparkt werden soll, muß vor der Inbetriebnahme die Kupplung geöffnet werden. Der dazu notwendige Druck wird in dem Speicherraum 23 zur Verfügung gestellt. Die Aufladung des Druckspeichers 23 erfolgt bei geöffnetem Ventil 24 und geschlossenem Ventil 14. Wenn die Ventile 14, 24 als Ventilblock zusammengestellt, kann auf separate Ansteuerleitungen verzichtet und ein Ventilschieber nur mit einer Erregerwicklung betrieben werden. Hierzu ist die Position des nicht dargestellten Ventilschiebers mit Federn in Mittenstellung zu halten und die beiden anderen Positionen mit jeweils anderer Polarität der Erregerwicklung eingestellt werden.

Bei geöffnetem Steuerventil 14 und geschlossenem Speicherventil 24 wird die Hydraulikflüssigkeit umgepumpt. Ist das Steuerventil 14 geschlossen und das Speicherventil geöffnet, wird der Druckspeicher 23 geladen, wenn die Brennkraftmaschine läuft. Steht die Brennkraftmaschine still, wird in dieser Ventilstellung der Druckspeicher entleert und die Reibungskupplung ausgekuppelt. Sind sowohl Steuerventil 14 als auch Speicherventil 24 geschlossen, ist die Reibungskupplung ausgekuppelt.

### Bezugszeichenliste

- 1: Schwungrad
- 2: Kupplungsgehäuse
- 3: Reibbelag
- 4: Reibbelag
- 5: Anpreßplatte
- 6: Feder/Membranfeder
- 6a: Federzungen/Zungen
- 7: Flansch
- 8: Pumpenteil
- 9: Dichtung
- 9': Dichtung
- 10: Pumpe/Pumpeinrichtung
- 10': Ringkanal
- 11: Getriebegehäuse
- 12: Vorratsraum
- 12': Ablaufbohrung
- 13: Pumpenraum
- 14: Steuerventil
- 14a: Ventilspule/Spule
- 15: Zulaufbohrung
- 16: Arbeitsraum
- 16': Kolben
- 17: Feder/Rückstellfeder
- 18: Ausrücklager
- 19: Ausrückeinrichtung
- 20: Nehmerzylinder
- 21: Eingangswelle/Getriebeeingangswelle
- 22: Kupplungsscheibe
- 23: Speicherraum/Druckspeicher
- 24: Ventil/Speicherventil
- 24a: Ventilspule/Spule

## Patentansprüche

1. Reibungskupplung ohne Kühlölkreislauf, insbesondere für Kraftfahrzeuge, mit einem drehfest mit dem Schwungrad (1) einer Brennkraftmaschine verbindbaren Kupplungsgehäuse (2), einer mit dem Kupplungsgehäuse (2) drehfest verbundenen, axial verlagerbaren, von einer Feder (6) belasteten Anpreßplatte (5), zur Anpressung einer mit Reibbelägen (3, 4) versehenen Kupplungsscheibe (22) gegen das Schwungrad (1), und einer hydraulischen Ausrückeinrichtung (19), die mit der Feder (6) in Verbindung bringbar ist, **gekennzeichnet durch** eine vom umlaufenden Kupplungsgehäuse (2) angetriebene Pumpeinrichtung (8, 10) zur Betätigung der Ausrückeinrichtung.

2. Reibungskupplung nach Anspruch 1, **dadurch gekennzeichnet**, daß die Ausrückeinrichtung (19) einen zum Kupplungsgehäuse (2) konzentrischen Nehmerzylinder (20) umfaßt.

3. Reibungskupplung nach Anspruch 1, **dadurch gekennzeichnet**, daß die Pumpeinrichtung (8, 10) eine Flügelzellenpumpe ist.

4. Reibungskupplung nach Anspruch 1, **dadurch gekennzeichnet, daß** die Pumpeinrichtung (8, 10) eine Zahnpumpe ist.

5. Reibungskupplung nach einem oder mehreren der vorstehenden Ansprüche, **dadurch gekennzeichnet, daß** die Pumpeinrichtung (8, 10) mit einem Druckspeicher (23) in Verbindung steht, der hydraulisch mit der Ausrückeinrichtung (19) verbunden ist.

6. Reibungskupplung nach Anspruch 5, dadurch gekennzeichnet, daß die Ausrückeinrichtung (19) bei stehendem Kupplungsgehäuse (2) über den Druckspeicher (23) betätigbar ist.

7. Reibungskupplung nach Anspruch 2 und 5, **dadurch gekennzeichnet, daß** der Druckspeicher (23) in den konzentrischen Nehmerzylinder (20) integriert ist.

## Claims

1. Friction clutch without a cooling-oil circuit, in particular for motor vehicles, with a clutch housing (2) connectable fixedly in terms of rotation to the flywheel (1) of an internal combustion engine, with an axially displaceable pressure plate (5), connected fixedly in terms of rotation to the clutch housing (2) and loaded by a spring (6), for pressing a clutch disc (22) provided with friction linings (3, 4) against the flywheel (1), and with a hydraulic disengagement device (19) which is capable of being connected to the spring (6), characterized by a pumping device (8, 10), driven by the rotating clutch housing (2), for actuating the disengagement device.

2. Friction clutch according to Claim 1, characterized in that the disengagement device (19) comprises a slave cylinder (20) concentric to the clutch housing (2).

3. Friction clutch according to Claim 1, characterized in that the pumping device (8, 10) is a vane-cell pump.

4. Friction clutch according to Claim 1, characterized in that the pumping device (8, 10) is a gear pump.

5. Friction clutch according to one or more of the preceding claims, characterized in that the pumping device (8, 10) is connected to a pressure accumulator (23) which is connected hydraulically to the disengagement device (19).

6. Friction clutch according to Claim 5, characterized in that, when the clutch housing (2) is stationary, the disengagement device (19) can be actuated via the pressure accumulator (23).

7. Friction clutch according to Claims 2 and 5, characterized in that the pressure accumulator (23) is integrated into the concentric slave cylinder (20).

## Revendications

1. Embrayage à friction sans circuit d'huile de refroidissement, en particulier pour véhicules à moteur, comprenant une boîte d'embrayage (2) pouvant être raccordée de manière fixe en rotation à la roue volante (1) d'un moteur à combustion interne, un plateau de pression (5) connecté fixe en rotation à la boîte d'embrayage (2), déplaçable axialement, sollicité par un ressort (6), servant à presser un disque d'embrayage (22) pourvu de garnitures de friction (3, 4) contre la roue volante (1), et un dispositif de débrayage hydraulique (19), qui peut être connecté au ressort (6), **caractérisé par** un dispositif de pompage (8, 10) entraîné par la boîte d'embrayage en rotation (2), pour l'actionnement du dispositif de débrayage.

2. Embrayage à friction selon la revendication 1, **caractérisé en ce que** le dispositif de débrayage (19) comprend un cylindre récepteur (20) concentrique par rapport à la boîte d'embrayage (2).

3. Embrayage à friction selon la revendication 1, caractérisé en ce que le dispositif de pompage (8, 10) est une pompe à cellules semi-rotative.

4. Embrayage à friction selon la revendication 1, caractérisé en ce que le dispositif de pompage (8, 10) est une pompe à dents.

5. Embrayage à friction selon l'une ou plusieurs des revendications précédentes, caractérisé en ce que le dispositif de pompage (8, 10) est raccordé à un accumulateur de pression (23) qui est connecté hydrauliquement au dispositif de débrayage (19).

6. Embrayage à friction selon la revendication 5, caractérisé en ce que le dispositif de débrayage (19) est commandable par l'intermédiaire de l'accumulateur de pression (23) lorsque la boîte d'embrayage (2) est fixe.

7. Embrayage à friction selon la revendication 2 et 5, caractérisé en ce que l'accumulateur de pression (23) est intégré au cylindre récepteur concentrique (20).
